Europäisches Patentamt

European Patent Office

Office européen des brevets

(11) Veröffentlichungsnummer: **0 490 215 A2**

## (12) EUROPÄISCHE PATENTANMELDUNG

(21) Anmeldenummer: **91120692.8**

(22) Anmeldetag: **02.12.91**

(51) Int. Cl.5: **H04M 1/02**

(30) Priorität: **12.12.90 DE 9016812 U**

(43) Veröffentlichungstag der Anmeldung:
**17.06.92 Patentblatt 92/25**

(84) Benannte Vertragsstaaten:
**DE ES FR IT NL**

(71) Anmelder: **SIEMENS AKTIENGESELLSCHAFT**
**Wittelsbacherplatz 2**
**W-8000 München 2(DE)**

(72) Erfinder: **Münscher, Wolfgang, Dipl.-Des.**
**Schurrweg 18**
**W-8000 München 60(DE)**

(54) **Fernsprechgerät mit Freisprecheinrichtung.**

(57) Fernsprechgerät mit Freisprecheinrichtung mit einem Handapparatekörper (7) sowie einer Ablage (1).

Es soll ein Fernsprechgerät aufgezeigt werden, mit dem ein Freisprechbetrieb ohne zusätzliche Schaltungsmaßnahmen möglich ist.

Dies wird dadurch erreicht, daß das Mikrofon im aufgelegten Zustand des Handapparatekörpers (7) über einen in der Mulde (2) der Ablage (1) verlaufenden Schallkanal (4) an die Umgebung angekoppelt ist.

FIG 1

EP 0 490 215 A2

Die Erfindung betrifft ein Fernsprechgerät mit Freisprecheinrichtung mit einem Handapparatekörper sowie einer Ablage.

Fernsprechgeräte mit Freisprecheinrichtung bestehen in der Regel darin, daß in dem Unterteil des Fernsprechgerätes, der sogenannten Ablage, ein kleines Mikrofon angeordnet ist, das über Schalleintrittsöffnungen an die Umgebung angekoppelt ist. Eine derartige Ausführung erfordert ein separates Mikrofon, wodurch der bauliche Aufwand vergrößert wird. Durch die Anordnung eines weiteren zusätzlich zum normalen Mikrofon vorzusehenden Freisprechmikrofons entstehen außerdem höhere Herstellungskosten des Fernsprechgerätes. Würde man auf ein separates Freisprechmikrofon verzichten, so entstünden Anpassungsprobleme, da das auf der Ablage liegende Mikrofon nicht dem Benutzer zugewandt ist.

Es gibt Lösungen, Anpassungsprobleme allgemein zu lösen. So ist es durch die DE-PS 940 967 bekannt, ein raumschallunempfindliches und akustisch rückkopplungsfreies Mikrofon mit einem vor der Membran verlaufenden ringförmigen Schallkanal zu versehen. Eine Lösung des eingangs beschriebenen Problems bringt diese Ausführung nicht. Eine etwas abgewandelte Ausführung ist in der US-PS 4 594 478 beschrieben.

Es ist Aufgabe der Erfindung, ein Fernsprechgerät vorzustellen, mit den ein effektiver Freisprechbetrieb ohne zusätzliche Schaltungsmaßnahmen möglich ist.

Die Aufgabe wird gemäß der Erfindung dadurch gelöst, daß das Mikrofon im aufgelegten Zustand des Handapparatekörpers über einen in der Mulde der Ablage verlaufenden Schallkanal an die Umgebung angekoppelt ist.

Das Mikrofon des Handapparatekörpers liegt also im aufgelegten Zustand des Handapparatekörpers am Schallkanal an. Der Schallkanal wirkt akustisch als Schalltrichter, so daß der Schall verstärkt dem Mikrofon zugeführt wird. Diese Ausführung ist für Kompakttelefone sowie für alle anderen Fernsprecher anwendbar.

Schallkanäle zur Schallverstärkung sind allgemein bekannt. So zeigt die DDR-PS 97 115 eine Anordnung in Fernsprechapparaten zur akustischen Tonrufverstärkung, bei welchen die Hörkapsel des Handapparatekörpers auf einer Mulde der Ablage aufliegt. In diesem Bereich ist die Mulde gemeinsamer Bestandteil mit dem Gabelumschalter und weist einen Hohlraum auf, der einerseits eine zur Hörkapsel gewandte Öffnung und nach außen führende weitere Öffnungen aufweist. Im aufgelegten Zustand wird so der Tonruf über den Hohlraum und die Öffnungen an die Umgebung verstärkt abgegeben. Ein Freisprechen ist mit dieser Anordnung jedoch nicht möglich. Auch durch die in der E.P. 0 275 996 gezeigten Anordnung wird die gestellte Aufgabe nicht gelöst.

Es ist vorteilhaft, wenn das Freisprechmikrofon und das Fernsprechmikrofon durch einen einheitlichen akustischen Wandler gebildet sind. Dies wird durch den Schallkanal ermöglicht, der die akustische Anpassung vornimmt.

Zur Verbesserung der akustischen Eigenschaften ist es vorteilhaft, daß das hinter der Gehäusewand des Handapparatekörpers angeordnete Mikrofon akustisch dicht mit dem Schallkanal verbunden ist.

Zweckmäßig ist es, wenn der dem Mikrofon zugewandte Teil der Mulde der Ablage im Bereich der Öffnung des Schallkanals mit einer Dichtung versehen ist. Diese Dichtung besteht in vorteilhafter Weise durch einen Ring aus Moosgummi, der die Öffnung umgibt.

Weiterhin ist es zweckmäßig, daß der in der Mulde der Ablage verlaufende Schallkanal an in der Ablage vorgesehenen Schalleintrittsöffnungen endet. Die Anordnung stellt somit im gewissen Grad einen Helmholtzresonator dar, durch den der Schallpegel zusätzlich angehoben wird.

Zur Verminderung von Störgeräuschen ist es zweckmäßig, daß die Schalleintrittsöffnungen dem Benutzer zugewandt sind.

Die Ablage weist normalerweise Hohlräume auf, die insbesondere bei Kompakttelefonen fast frei von Schaltungsmitteln sind. Es ist daher zweckmäßig, daß der Schallkanal durch einen Teil des Hohlraums der Ablage gebildet ist.

Im folgenden sei die Erfindung anhand von drei Figuren näher erläutert. Es zeigen

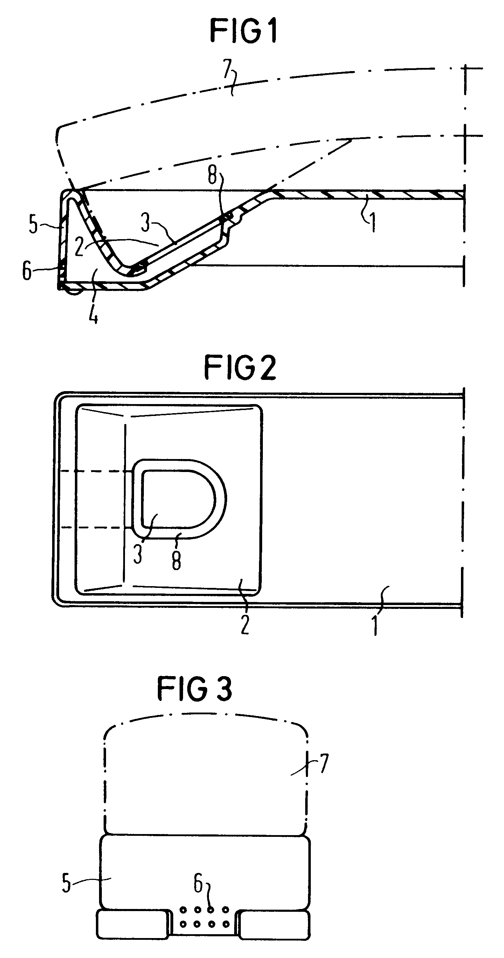

Figur 1 eine Ablage eines Fernsprechers im Bereich des Mikrofons im Schnitt,

Figur 2 die Ablage im Bereich des Mikrofons in Draufsicht und

Figur 3 den Fernsprecher als Kompaktfernsprecher von vorne.

Die Ablage 1 weist im Bereich des Mikrofons des Fernsprechers eine muldenförmige Aufnahme 2 auf, wobei die Wandung der Aufnahme im Bereich des Mikrofons offen ist. Die dadurch entstandene Öffnung 3 steht in Verbindung mit einem Hohlraum, der einen Schallkanal 4 bildet. An der Vorderseite 5 der Ablage befinden sich mehrere Schalleintrittsöffnungen 6, die mit dem Schallkanal in Verbindung stehen.

Zur Verbesserung der Verständlichkeit ist der Handapparatekörper 7 gestrichelt angedeutet. Damit die Schallführung störungsfrei erfolgt, ist die Öffnung 3 des Schallkanals 4 im Randbereich mit einer Dichtung 8 versehen, an der die Wandung des Handapparatekörpers direkt anliegt.

**Patentansprüche**

**1.** Fernsprechgerät mit Freisprecheinrichtung mit einem Handapparatekörper sowie einer Ablage,

**dadurch gekennzeichnet,** daß das Mikrofon im aufgelegten Zustand des Handapparatekörpers (7) über einen in der Mulde (2) der Ablage (1) verlaufenden Schallkanal (4) an die Umgebung angekoppelt ist.

2. Fernsprechgerät nach Anspruch 1,
**dadurch gekennzeichnet,** daß das Fernsprechmikrofon und das Freisprechmikrofon durch einen einheitlichen akustischen Wandler gebildet sind.

3. Fernsprechgerät nach Anspruch 1,
**dadurch gekennzeichnet,** daß das hinter der Gehäusewand des Handapparatekörpers angeordnete Mikrofon akustisch dicht mit dem Schallkanal (4) verbunden ist.

4. Fernsprechgerät nach Anspruch 1,
**dadurch gekennzeichnet,** daß der dem Mikrofon zugewandte Teil der Mulde der Ablage im Bereich der Öffnung (3) des Schallkanals mit einer Dichtung (8) versehen ist.

5. Fernsprechgerät nach Anspruch 4,
**dadurch gekennzeichnet,** daß die Dichtung 8) aus einem Ring aus Moosgummi besteht, der die Öffnung (3) umgibt.

6. Fernsprechgerät nach Anspruch 1,
**dadurch gekennzeichnet,** daß der in der Mulde der Ablage verlaufende Schallkanal an in der Ablage vorgesehenen Schalleintrittsöffnungen (6) endet.

7. Fernsprechgerät nach Anspruch 1,
**dadurch gekennzeichnet,** daß die Schalleintrittsöffnungen dem Benutzer zugewandt sind.

8. Fernsprechgerät nach Anspruch 1,
**dadurch gekennzeichnet,** daß der Schallkanal durch einen Teil des Hohlraums der Ablage gebildet ist.

## FIG 1

## FIG 2

## FIG 3